# EUROPEAN PATENT APPLICATION

(11) **EP 2 998 621 A1**
(43) Date of publication of application: **23.03.2016**
(21) Application number: 14446504.4
(22) Date of filing: 22.09.2014
(51) Int. Cl.: F16K 1/36, F16K 1/46, F16K 3/24

(54) **Fluid control valve**

(71) Applicant: Esbe AB, 330 21 Reftele (SE)
(72) Inventor: Celander, Filip, 330 21 REFTELE (SE)
(74) Representative: Awapatent AB

(57) **Abstract**

The present invention relates to a fluid control valve comprising a valve housing (3) with a valve chamber (5) having a first and a second port (11, 13), a valve closure member (7), which is displacably arranged inside said valve chamber (5) and displacable along a valve center axis (8), and a first sealing ring groove (15) formed in one (7) of the valve closure member (7) and the valve housing (3), wherein the valve closure member (7) is arranged to close at least one (11) of said valve ports (11, 13). The bottom (21) of the first sealing ring groove (15) comprises a tapered guiding surface (23) which is adapted to, upon installation of an elastic sealing ring (25) in the first sealing ring groove (15), guide the sealing ring (23) to a predetermined position, in which the sealing ring (25) is in contact with one (17) of the side walls (17, 19) of the first sealing ring groove (15).

## Description

### Field of the Invention

The present invention relates to a fluid control valve comprising a valve housing with a valve chamber having a first and a second port, a valve closure member, which is displacably arranged inside said valve chamber and displacable along a valve center axis, and a first sealing ring groove formed in one of the valve closure member and the valve housing, wherein the valve closure member is arranged to close at least one of said valve ports.

### Background of the Invention

A valve of this type may be used in a domestic heating and/or cooling system.

Such a valve is often provided with a sealing device in the form of a sealing ring which is received in a sealing ring groove formed in the valve closure member or in the valve housing.

A drawback of this valve is that the control accuracy may be regarded as insufficient.

### Summary of the Invention

It is an object of the present invention to overcome the above described drawback, and to provide an improved fluid control valve, which provides for improved control accuracy in the opening phase of the valve.

This and other objects that will be apparent from the following summary and description are achieved by a fluid control valve according to the appended claims.

According to one aspect of the present disclosure there is provided a fluid control valve comprising a valve housing with a valve chamber having a first and a second port, a valve closure member, which is displacably arranged inside said valve chamber and displacable along a valve center axis, and a first sealing ring groove formed in one of the valve closure member and the valve housing, wherein the valve closure member is arranged to close at least one of said valve ports, wherein the bottom of the first sealing ring groove comprises a tapered guiding surface which is adapted to, upon installation of an elastic sealing ring in the first sealing ring groove, guide the sealing ring to a predetermined position, in which the sealing ring is in contact with one of the side walls of the first sealing ring groove.

The sealing ring groove thus secures that a sealing ring, such as an elastic O-ring seal, assumes a predetermined position in the sealing ring groove. This has the advantage that the valve behaves in a predictable manner upon opening of the valve from a closed state to an open state, i.e. in the opening phase of the valve. Hence, a valve with high control accuracy may be achieved. In order to facilitate installation of the sealing ring the sealing ring groove is often slightly wider than the sealing ring itself, i.e. the sealing ring may assume different positions, as seen along the valve center axis, in the sealing ring groove. The guiding surface of the sealing ring groove thus serves to, upon installation of a sealing ring in the sealing ring groove, guide the sealing ring to a predetermined position. A sealing ring may thus be installed in a predetermined position in the sealing ring groove even when the width of the sealing ring groove is greater than the width of the sealing ring itself. A sealing ring may thus be properly installed in the sealing ring groove in an easy manner. The sealing ring is guided to and maintained in the predetermined position due to the inherent elasticity of the sealing ring in combination with the tapered guiding surface.

Especially in the early stages of opening of the valve from a closed state the control accuracy may be influenced by the actual sealing ring position in the groove in which it is installed. Upon installation of a sealing ring the guiding surface guide the sealing ring to a predetermined position, which results in a very predictable and accurate control of flow through the valve, even in the early stages of opening of the valve from a closed state.

According to one embodiment the fluid control valve is a two-way valve.

According to one embodiment the guiding surface is linearly tapered as seen along the valve center axis.

According to one embodiment the first sealing ring groove is formed in the valve housing.

According to one embodiment the first sealing ring groove is formed in the valve closure member.

According to one embodiment the valve comprises an elastic sealing ring, such as an O-ring seal, which is received in the first sealing ring groove.

According to one embodiment the valve closure member is hollow and the fluid control valve comprises a second sealing ring groove formed in one of the valve closure member and the valve housing.

According to one embodiment the bottom of the second sealing ring groove comprises a tapered guiding surface which is adapted to, upon installation of an elastic sealing ring in the second sealing ring groove, guide the sealing ring to a predetermined position, in which the sealing ring is in contact with one of the side walls of the second sealing ring groove.

According to one embodiment the second sealing ring groove is formed in the valve housing.

According to one embodiment the second sealing ring groove is formed in the valve closure member.

According to one embodiment the fluid control valve is intended for controlling flow of liquid in a heating and/or cooling system in a building.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 a is a schematic sectional view of a fluid control valve according to an embodiment of the present disclosure.
Figs. 1b-c show enlarged parts of Fig. 1 a.
Figs. 2a-c illustrate installation of an elastic sealing ring in a sealing ring groove of the fluid control valve shown in Fig. 1.
Fig. 3 is a schematic sectional view of a fluid control valve according to a second embodiment of the present disclosure.

### Description of preferred embodiments

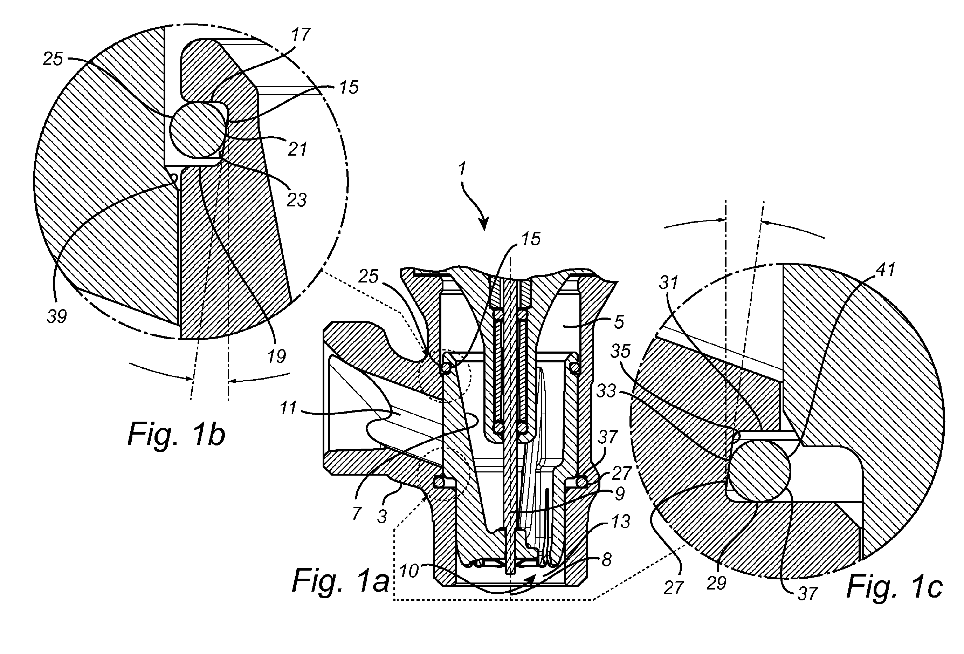

Figs. 1a-c illustrate a fluid control valve 1 according to an embodiment of the present disclosure. The fluid control valve 1, which is a two-way valve, is intended for controlling flow of liquid in a pipe system and may be used e.g. for controlling liquid flow in a heating and/or cooling system in a building.

The fluid control valve 1 comprises a housing 3, defining a circular cylindrical valve chamber 5, a valve closure member 7 and an operating stem 9 for operating the valve closure member 7. The operating stem 9 is configured to be connected to a valve actuator in the form of an electric valve actuator (not shown). The valve chamber 5 comprises a first valve port, in the form of an inlet port 11, and a second valve port, in the form of an outlet port 13.

The valve closure member 7 is slidably seated inside the valve chamber 5. The overall shape of the valve closure member 7 is circular cylindrical. The valve closure member 7 is hollow and thus comprises a fluid passage 10 therethrough. In this embodiment the valve closure member 7 is thus "open", i.e. open to flow therethrough.

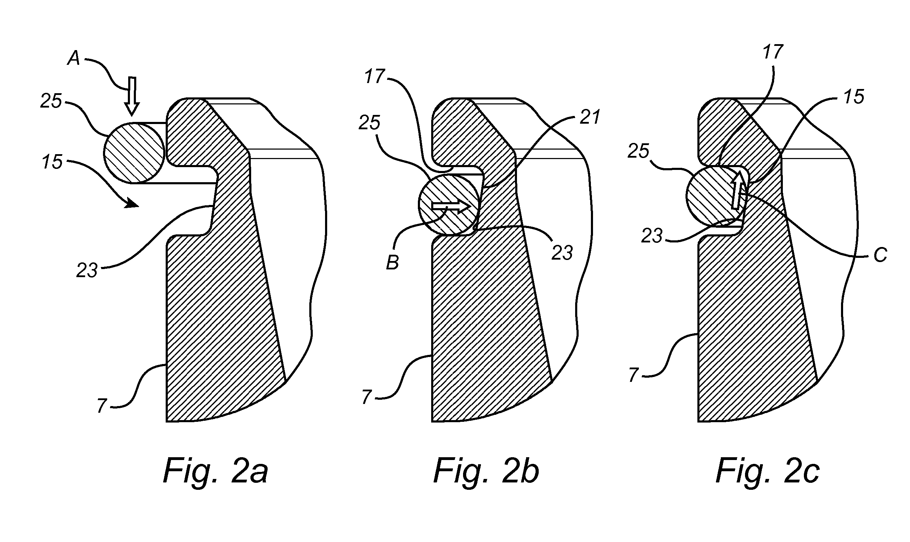

A first sealing ring groove 15 having a first side wall 17, a second side wall 19 and a bottom 21 is formed in the valve closure member 7, as best illustrated in Fig. 1 a. The bottom 21 of the first sealing ring groove 15 comprises a tapered guiding surface 23 for proper installation of a sealing ring in the sealing ring groove 15, as will be described hereinafter with reference to Figs. 2a-c. In this embodiment the guiding surface 23 of the first sealing ring groove 21 tapers linearly in a direction toward the first side wall 17, as illustrated in Fig. 1 b. The groove bottom 21 of the first sealing ring groove 15 thereby forms a tapered guiding surface 23, which is adapted to, upon installation of a sealing ring, guide the sealing ring to a predetermined position in which it is seated against the first side wall 17 of the first sealing ring groove 15.

A first elastic sealing ring, in the form of an elastic O-ring 25, is received in the first sealing ring groove 15. As illustrated in Fig. 1b the width of the first sealing ring groove 15 is greater than the width of the sealing ring 25, which facilitates installation of the sealing ring 25 in the first sealing ring groove 15. There is thus a clearance between the second sidewall 19 of the first sealing ring groove 15 and the sealing ring 25.

A second sealing ring groove 27 having a first side wall 29, a second side wall 31 and a bottom 33 is formed in the valve housing 3, as best illustrated in Fig. 1 c. The bottom 33 of the second sealing ring groove 27 comprises a tapered guiding surface 35 for proper installation of a sealing ring in the second sealing ring groove 27. In this embodiment the guiding surface 33 of the second sealing ring groove 27 tapers linearly in a direction toward the first side wall 29 of the second sealing ring groove 27, as best illustrated in Fig. 1 c. The groove bottom 33 of the second sealing ring groove 27 thereby forms a tapered guiding surface 35, which is adapted to, upon installation of a sealing ring, guide the sealing ring to a predetermined position in which it is seated against the first side wall 29 of the second sealing ring groove 27.

A second elastic sealing ring, in the form of an elastic O-ring 37, is received in the second sealing ring groove 27.

The valve closure member 7 is slidable along a valve center axis 8 between different operating positions to control fluid flow through the valve 1. In a closed position (not shown) the valve closure member 7 is seated against each of an upper valve seat 39 and a lower valve seat 41. In the closed position the inlet port 11 is blocked by the valve closure member 7 and fluid flow through the valve 1 is prevented.

As the valve closure member 7 is moved along the valve center axis 8 in a direction away from the closed position of the valve 1 fluid communication between the inlet port 11 and the outlet port 13 is enabled and fluid flow through the valve 1 is then allowed.

In the operating position shown in Fig. 1 a the valve closure member 7 has been moved slightly from the closed position to a first open position. In this first open position a limited fluid flow from the inlet port 11 to the outlet port 13 is allowed. As the valve closure member 7 is moved further along the valve center axis 8 a larger fluid flow is allowed. The sealing rings 25, 27 remain in their predetermined positions regardless of the size of the flow through the valve 1. A predictable and accurate characteristic of the valve 1 at different flow rates is thus enabled.

With reference to Figs. 2a-c installation of an elastic sealing ring 25 in the first sealing ring groove 15 of the fluid control valve 1 will be explained hereinafter.

Fig. 2a shows the elastic sealing ring 25 in a stretched state positioned around the valve closure member 7. Upon installation of the sealing ring 25 in the groove 15 it is moved in the stretched state to the sealing ring groove 15, as illustrated by the arrow A in Fig. 2a. The inherent elastic force of the elastic sealing ring 25 then forces the sealing ring 25 toward the groove bottom 21 and presses the sealing ring 25 against the tapered guiding surface 23 of the groove bottom 21, as illustrated by the arrow B in Fig. 2b. The guiding surface 23 guides the elastic sealing ring 25 toward the first side wall 17 of the groove 15, as illustrated by the arrow C in Fig. 2c. The guiding surface 23 guides the sealing ring 25 to a predetermined position, illustrated in Fig. 2c, in which it is seated against the first side wall 17 of the first sealing ring groove 15.

The bottom 21 of the first sealing ring groove 15 thus forms a tapered guiding surface 23, which is adapted to, upon installation of a sealing ring 25 in the sealing ring groove 15, guide the sealing ring 25 to a predetermined position, illustrated in Fig. 1b and Fig. 2c, in which it is seated against the first side wall 17 of the first sealing ring groove 21.

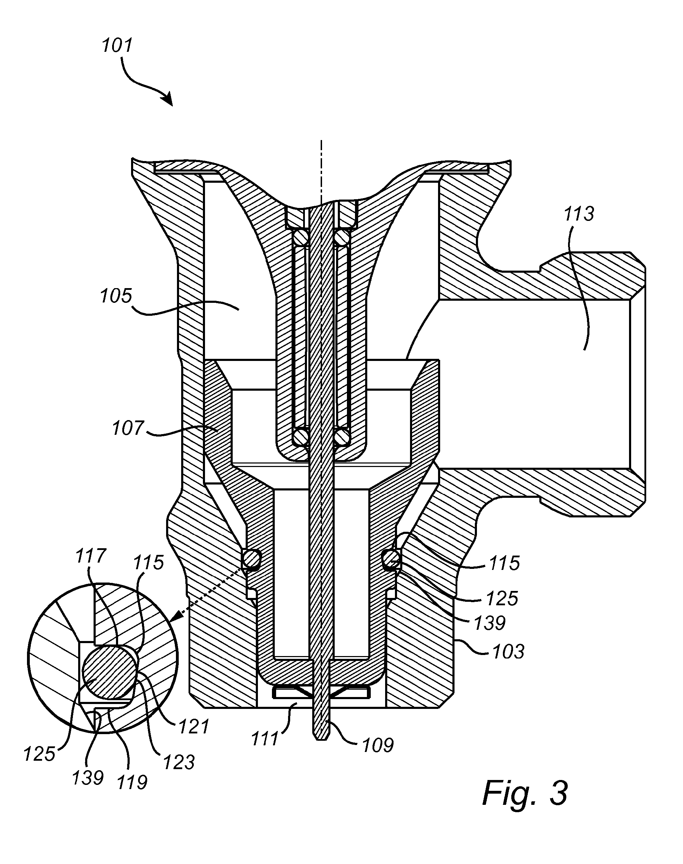

Fig. 3 illustrates a control valve 101 according to a second embodiment of the present disclosure. Many features disclosed in the first embodiment are also present in the second embodiment with similar reference numerals identifying similar or same features. Having mentioned this, the description will focus on explaining the differing features of the second embodiment.

The control valve 101 comprises a housing 103, defining a circular cylindrical valve chamber 105, a displacable valve closure member 107 and an operating stem 109 for operating the valve closure member 107. The valve chamber 105 comprises a first valve port, in the form of an inlet port 111, and a second valve port, in the form of an outlet port 113. A sealing ring groove 115 having a first side wall 117, a second side wall 119 and a grove bottom 121 is formed in the valve closure member 107. The bottom 121 of the sealing ring groove 115 comprises a tapered guiding surface 123 for proper installation of a sealing ring in the sealing ring groove 115. An elastic sealing ring, in the form of an elastic O-ring 125, is received in the sealing ring groove 115.

The valve closure member 107 is slidable along a valve center axis between different operating positions to control fluid flow through the valve 101. In a closed position (not shown) the valve closure member 107 is seated against a valve seat 139. In the closed position the inlet port 111 is blocked by the valve closure member 107 and fluid flow through the valve 101 is prevented.

This embodiment differs in that the control valve 101 comprises a "closed" valve member 107, i.e. not open to flow therethrough. Since the valve closure member 107 is closed one single sealing ring groove 115 is enough to provide sealing of the valve 101 in the closed position in this embodiment. As mentioned hereinbefore the sealing ring groove 115 is formed in the valve closure member 107. It is however realized that the sealing ring groove instead may be formed in the valve housing 103. Upon installation of the elastic sealing ring 125 in the sealing ring groove 115 the tapered guiding surface 123 of the sealing ring groove 115 guides the sealing ring to a predetermined position, illustrated in Fig. 3, in which it is seated against the first side wall 117 of the sealing ring groove 115, in the same manner as described hereinbefore with reference to Figs. 2a-c.

It is realized that such a closed valve member 107 may have another shape. For instance it may be disc-shaped or ball-shaped.

It will be appreciated that numerous variants of the embodiments described above are possible within the scope of the appended claims.

Hereinbefore linearly tapered guiding surfaces have been described. It is however appreciated that the guiding surface, which is adapted to, upon installation of a sealing ring, guide the sealing ring to a predetermined position, may taper in a non-linear manner.

## Claims

1. Fluid control valve comprising
a valve housing (3; 103) with a valve chamber (5; 105) having a first and a second port (11, 13; 111, 113),
a valve closure member (7; 107), which is displacably arranged inside said valve chamber (5; 105) and displacable along a valve center axis (8), and
a first sealing ring groove (15; 115) formed in one (7; 107) of the valve closure member (7; 107) and the valve housing (3; 103),
wherein the valve closure member (7; 107) is arranged to close at least one (11; 111) of said valve ports (11, 13; 111,113),
**characterized in that**
the bottom (21; 121) of the first sealing ring groove (15; 115) comprises a tapered guiding surface (23; 123) which is adapted to, upon installation of an elastic sealing ring (25; 125) in the first sealing ring groove (15; 115), guide the sealing ring (23; 123) to a predetermined position, in which the sealing ring (25; 125) is in contact with one (17; 117) of the side walls (17, 19; 117, 119) of the first sealing ring groove (15; 115).

2. Fluid control valve according to claim 1, wherein the fluid control valve is a two-way valve (1; 101).

3. Fluid control valve according to any of the preceding claims, wherein said guiding surface (23; 123) is linearly tapered as seen along the valve center axis (8).

4. Fluid control valve according to any of the preceding claims, wherein the first sealing ring groove (15; 115) is formed in the valve housing (3; 103).

5. Fluid control valve according to any of the preceding claims 1-3, wherein the first sealing ring groove (27) is formed in the valve housing (3).

6. Fluid control valve according to any of the preceding claims, further comprising an elastic sealing ring (25; 125) which is received in the first sealing ring groove (15; 115).

7. Fluid control valve according to any of the preceding claims, wherein the valve closure member (7) is hollow and the fluid control valve (1) comprises a second sealing ring groove (27) formed in one (3) of the valve closure member (7) and the valve housing (3).

8. Fluid control valve according to claim 7, wherein the bottom (33) of the second sealing ring groove (27) comprises a tapered guiding surface (35) which is adapted to, upon installation of an elastic sealing ring (37) in the second sealing ring groove (27), guide the sealing ring (37) to a predetermined position, in which the sealing ring (37) is in contact with one (29) of the side walls (29, 31) of the second sealing ring groove (27).

9. Fluid control valve according to any of the claims 7-8, wherein the second sealing ring groove (27) is formed in the valve housing (3).

10. Fluid control valve according to any of the preceding claims, wherein the fluid control valve (1, 101) is intended for controlling flow of liquid in a heating and/or cooling system in a building.
